(19) Europäisches Patentamt
European Patent Office
Office européen des brevets

(11) Publication number: **0 167 725 A2**

# (12) EUROPEAN PATENT APPLICATION

(21) Application number: 85104524.5

(22) Date of filing: 15.04.85

(51) Int. Cl.⁴: G 06 F 5/00

(30) Priority: 13.04.84 JP 72940/84

(43) Date of publication of application: 15.01.86 Bulletin 86/3

(84) Designated Contracting States: DE FR GB

(71) Applicant: HITACHI, LTD.
6, Kanda Surugadai 4-chome Chiyoda-ku
Tokyo 100(JP)

(72) Inventor: Sugino, Kazuhiro
Koushin-ryo 850, Maioka-cho Totsuka-ku
Yokohama-shi Kanagawa-ken(JP)

(72) Inventor: Tsuchiya, Noboru
Maeda Haitsu 924 511-2, Maeda-cho Totsuka-ku
Yokohama-shi Kanagawa-ken(JP)

(72) Inventor: Kamikubo, Tadamasa
Keimei-ryo 850, Maioka-cho Totsuka-ku
Yokohama-shi Kanagawa-ken(JP)

(72) Inventor: Ohnari, Hisashi
2798-18, Kosugaya-cho Totsuka-ku
Yokohama-shi Kanagawa-ken(JP)

(74) Representative: Patentanwälte Beetz sen. - Beetz jun.
Timpe - Siegfried - Schmitt-Fumian
Steinsdorfstrasse 10
D-8000 München 22(DE)

## (54) Dynamic data type conversion system.

(57) This invention is applied to a data handling system for type conversion of a record which is composed of a plurality of data having different attributes and lengths. This system has a means (3,4,5,7,9,10) for accessing a record in units of data, a means for converting the attributes and lengths of the data, and a means for editing the converted data in a predetermined order.

FIG. 2

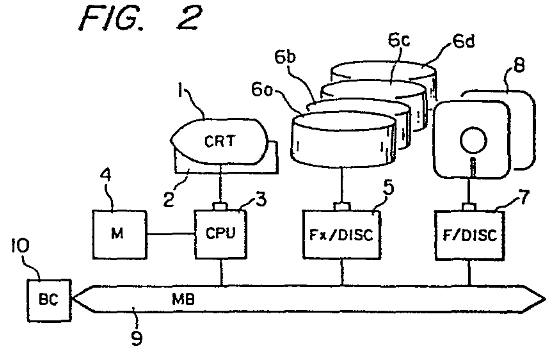


EP 0 167 725 A2

0167725

TITLE OF THE INVENTION

DYNAMIC DATA TYPE CONVERSION SYSTEM

BACKGROUND OF THE INVENTION

Field of the Invention

This invention relates to a system for dynamic conversion of types of data in a data handling system, and more particularly to a system for dynamic conversion of types of data suitable for type conversion executed simultaneously with reading of data in units of records when handling data whihc is of the same quality but of different attributes or lengths.

Description of the Prior Art

A data handling system is a system for supplying data in units of records as compared with an application system for host processing of data. Data which are processed in the application system and constitute one record are often of different attributes or lengths even if they posses the same quality in terms of the convenience of control or in relation to other existing systems. In a conventional data handling system, when the attributes or lengths of the data change, application programs have often been unavoidably modified because the external interface specifications change even in applications of the same function. A method for solving this kind of problem is discussed in "An Introduction to Data Base Systems -Third Edition-" by C.J DATE published by Addison-Wesley Publishing Company in November, 1974 (pp 17 - 27, and pp 159 - 168). In this book a proposal of ANSI /X3/ SPARC (DBMS Framework Report of Study Group on Data Base Management Systems, IFIP Press., 1978) is taken up and the advantages of thinking data models in three layers are described. That is, a general view constituting a DBMS is discussed using three layers of models consisting of a concept model: a model of the real world in which enterprises or organizations take interest; an external model: a model of a view as to data which is prepared for every user of application; and an internal model: a model dependent on the DBMS used. This view heightens the independence of data and a program, but no concrete way to realize this is discussed. Further, in the field of production control, a model is not sufficient for determining a data structure because controlling conditions should be taken into consideration. Therefore, the above-described method still requires a change of application programs and thus is insufficient for solving the problems in the prior art.

SUMMARY OF THE INVENTION

Accordingly it is an object of the invention to provide a dynamic data type conversion system which dispenses with the need for a change of application program with a change in attribute and length of data which is manipulated in application.

It is another object of the invention to provide a dynamic data type conversion system which is capable of maintaining the independence of a data structure in relation to application and which facilitates addition and change of faculty.

It is a further object of the invention to provide a dynamic data type conversion system which dispenses with the need for a change of host application program when a data structure is changed with the enlargement of a system structure.

A dynamic data type conversion system according to the invention considers an organized collection of records as an object to be processed, the records consisting of a plurality of data of different attributes and lengths. The data is controlled by information such as attribute, length and order. A dynamic data type conversion system according to the invention is composed by adding a description system capable of describing information which indicates the attribute, length and order of data in a data processing description to a data handling system which is capable of data processing description in units of records in accordance with the attribute, length and order of the data and of data processing in accordance with the description. It is further provided with a mechanism for accessing a record in units of data, a mechanism for converting the attribute and length of data, and a mechanism for editing data. Thus, at the time of access of a record it is accessed in units of data, the attribute and length of the data being converted such as to be edited again as a record.

BRIEF DESCRIPTION OF THE DRAWINGS

Fig. 1 illustrates the outline of a computer system with a command system used for an embodiment of a dynamic data type conversion system according to the invention;

Fig. 2 shows the hardware structure of the computer system shown in Fig. 1;

Fig. 3 shows the structure of the software system which is operated in the computer system shown in Fig. 1;

Fig. 4 is an explanatory view of the logical structure of the data which the command system shown in Fig. 3 handles;

Fig. 5 is an explanatory view of the main area of disc input and output in the command system shown in Fig. 3.

Fig. 6 explains matters related to the data of the command system;

Fig. 7 is an explanatory view of the external interface information of the wage calculation command in the command system;

Fig. 8 is a flow chart of the processing of the command system;

Fig. 9 illustrates the concept of the data conversion in a system according to the invention;

Fig. 10 is an explanatory view of the working area at the time of type conversion; and

Fig. 11 is a flow chart illustrating the procedure of a type conversion according to the invention.

DETAILED DESCRIPTION OF THE PREFERRED EMBODIMENT

Hereinunder an embodiment of the present invention will be described in detail with reference to the accompanying drawings.

Referring first to Fig. 1, the computer in the command system is composed of the console display 1, keyboard 2, and box 30. Fig. 2 shows the structure of the hardware of the system shown in Fig. 1. A central processing unit (CPU) 3, a main storage 4, a fixed disk control unit 5, disks 6 (6a to 6d), a floppy disk control unit 7, a floppy disk 8, a multi-bus 9 and a bus control unit 10 are provided in the box 30.

As is shown in Fig. 3, this command system is composed of the console display 1, the keyboard 2, the disks 6a - 6d shown in Figs. 1 and 2, a command processor 20a which is resident in the main storage 4 shown in Fig. 2, macro explosion portion 20b, and a data handling system 21. The data handling system 21 is composed of a file control module 21a, a buffer control module 21b and a disk I/O module 21c. The command processor 20a fetches the command which has been input as a character string from the console display 1 into the main storage 4 through the multi bus 9 in the input order through the operation of the keyboard 2 by an operator, interprets the command and executes it. The macro explosion portion 20b explodes the command which is fed from the command processor 20a into a command string on the basis of the command definition which is planted in the disk 6d in advance. At this time the macro explosion portion 20b explodes the command by loading the command definition from the disk 6d to the main storage 4 through the fixed disk control unit 5 and the multi bus 9.

The file control module 21a controls the files in the disks 6a to 6c in the data handling system 21. The buffer control module 21b controls loading of the data in the disks 6a to 6c into the buffer memory on the main storage 4 in units of pages. The disk I/O module 21c loads the data of the disks 6a to 6c into the buffer memory on the main storage 4 through the fixed disk control unit 5 and the multi bus 9.

Fig. 4 shows the logical structure of the data handled in this system and the physical structure of the data in the disks 6. All the data and control information which are processed in this system are processed as tabular data. A table is an organized collection of records which are units in terms of processing, and a record is an organized collection of data of different attributes and lengths. In other words, the record holds information indicating the attributes, lengths and order of data, and is defined as a collection of data arranged in a certain order. An individual item of data on the record is controlled as a field on the table, and data which belongs to the same field has the same attribute, length and position in the record which is indicated as a relative position reading from the head of the record. The field is distinguished by its field name.

A file control table 40a is a control table which is resident on the main storage 4, and one record of the table is information which controls one file. The data of one file corresponds to the data in one disk 6. In the field having a record of the file control table 40a there is positional information as to a table control table 40b. The table control table 40b exists in the disk 6, and controls all the tables in the file. One record of the file represents one table. The above-described information as to a table with respect to the field is also controlled as a table, namely field control table. The field control table controls the field information of all the tables included in the same file, and one record of the field control table indicates information on one field. By making a block of a table 40c correspond with a physical page on the disk 6, a necessary capacity of information is assigned to the table 40c at a necessary time, whereby it is possible to use the disk efficiently.

The disk 6 is controlled, as is shown in Fig. 4, by units of pages which are fixed at every disk (file), and a page corresponds to a block of the table 40C. To the page is added the name of the table and the number of the block for which the page is being used as additional information (e.g. T3, 1).

Fig. 5 shows a buffer memory 51 on the main storage 4 which inputs and outputs the data in the disks 6a to 6c through the fixed disk control unit 5, multi bus 9 and the CPU 3; a buffer control table 50 having control information on the buffer memory 51; and the file control table 40a. The buffer control table 50 is one record, and has information for controlling one block of the buffer memory 51. The information consists of (1) the data set number of the disk which has the file which the block is mapping, (2) the page number of the disk, (3) a flag indicating whether writing is executed in the block, (4) a pointer for paging algorithm LRU (Least Recently Used), (5) an address on the buffer memory 51 into which the page of the file is loaded, (6) the name of the table to which the page to be loaded belongs, (7) the block number in the table to which the page to be loaded corresponds, and (8) a counter indicating the number of cases of I/O. The buffer memory 51, which is divided into blocks of the same size as the page in the disk 6 (in the Figure it is divided into 28 blocks), is a region which inputs and outputs the data of the disk 6 and the main storage 4 in units of pages. It is the disk I/O 21c shown in Fig. 3 that feeds and receives the data between the disk 6 and the buffer memory 51 and the buffer control module 21b controls the buffer control table 50.

Fig. 6(a) shows the tabular data which are planted in the disk 6a. As is clear from the Figure, the data is an organized collection of records 60, one of which is an operating unit in the data handling system 21, and is composed of a plurality of fields of different attributes and lengths. The information about a field of the record 60 (title, attribute, length, position in the record (position relative to the head of the record)) is, as is shown in Fig. 4, is planted together with the table of the data as a field control table 62 in the disk 6. In the case of Fig. 6(a), the title of the record 60 is composed of fields of a number, name, gender, age and working time. The number shows that the attribute is an integer (indicated by symbol I), that the length is 6 bytes (in combination with attribute I and length 6 bytes, they are indicated as I6), and that the position in the record is in the 0 byte order. The name shows that the attribute is a character (indicated by symbol C), the length is 8 bytes, and the position in the record is in the 6 byte order. The same is the case with gender, age, working time and so on.

Fig. 6(b) shows the tabular data which are planted in the disk 6b. Like the data which are planted in the disk 6a, they are tabular data 64 but in the field 66 constituting the record, they have different attributes and lengths for the number and the name, and different order with respect to the age and the gender.

A wage calculation command 70 shown in Fig. 7 processes calculation of wages in accordance with , for example, the age, gender, working time of an employee. The external interface information 72 of the input data 74 is, as is shown in Fig. 7, a unit of a record consisting of fields of number, name, gender, age and working time. This interface information 72 is planted in the disk 6d.

The processing executed when the wage calculation command is input will next be explained as an example with reference to Fig. 8.

When wage calculation of employees is necessary (step 102), an operator in charge of wage calculation inputs the wage calculation command from the keyboard 2 in accordance with the input prompting message on the console display 1 (step 104). The command processor 20a shown in Fig. 3 then interprets and identifies the input wage calculation command by retrieving and collating a command group which is registered in the disk 6d (step 106). The registered information on the wage calculation command is loaded into the main storage 4 and prepares for the execution of the wage calculation command (step 108). The command processor 20a supplies the external interface information to the data handling system 21 which is defined in the information on the wage calculation command as a parameter, and gives instructions that the data necessary for the execution of the wage calculation command should be received in units of records (steps 110, 112). The file control module 21a in the data handling system 21 decides, as is shown in Fig. 4, that the file F1 from among the file control table 40a is a disk D2 (6b) (step 114). The file control module 21a calls the buffer control module 21b and requires that the table control table 40b in the file F1 (disk D2) should be loaded into the buffer memory 51 in the main storage 4 (step 116). If the table control table 40b for the file F1 is not in the buffer memory 51 (step 118), the buffer control module 21b loads the table control table 40b for the file F1 from the disk D2 (6b) into an empty block (e.g. block 2) in the buffer memory 51 through the disk I/$\overline{O}$ module 21C, and shows the buffer control table 50 that the table control table (page 1) 40b exists in the block (step 120). The file control module 21a reads from the table control table 40b in the block (block 2) in the buffer memory 51 that, for example, a table TA is in page 4, for example, of the file F1 (disk D2), and calls the buffer control module 21b to demand that the table TA should be loaded into the buffer memory 51 (step 122). If the table TA of the file F1 (page 4) is not in the buffer memory 51 (step 124), the buffer control module 21b loads the page 4 (table TA) from the disk D2 into an empty block 5 in the buffer memory 51 through the disk I/$\overline{O}$ module 21C, and writes onto the buffer control table 50 information indicating that the page 4 has been loaded into the block 5 (step 126). The file control module 21a checks whether or not the field information for the table TA written on the table control table 40b is the same as the external interface information 72 of the wage calculation command 70 (steps 128, 130). In the case shown in Fig. 6(a), since the field information 62 of the table and the external interface information 72 of the wage calculation command 70 is the same, data to the extent of one record of the table TA is taken out from the block 5 in the buffer memory 51 (step 138). In the case of Fig. 6(b), however, the field information 66 of the table is different from the external interface information 72 of the wage calculation command 70. That is, the field information 66 of the table has fields of number, name, age, gender and working time, and their order, and the attributes and the lengths are, respectively, C4, C6, I4, C1, and I4. The external interface information 72 of the wage calculation command 70 has fields of number, name, age, gender, working time and their order, and the attributes and the lengths are, respectively, I6, C8, C1, I4, and I4. While the field of number is C4 in the former, it is I6 in the latter. The field of name is C6 in the former, while the latter is C8. Further the order of fields of gender and age is reversed. Therefore, one record of the table TA is taken out from the block 5 in the buffer memory 51 (step 132), and with respect to the record taken out, attributes and lengths are converted in units of fields (step 134), and data after type conversion is edited (step 136). Conversion and edition are executed as follows. In Fig. 9 is shown the record 80 which is taken out. According to the external interface information 72 of the wage calculation command 70, first of all, the number field is required to have an attribute and a length of I6. For this purpose the number field C4 of the record taken out 80 shown in Fig. 9 is accessed. Fig. 10 shows the detailed view of the number field. The procedure of conversion and edition will be explained with reference to the flow chart shown in Fig. 11. As is shown in Figs. 9, 10, the case of converting the data "201" of a character type and a length of 4 bytes into the data of an integer type and a length of 6 bytes will here be described. As is shown in Fig. 11, a work area INT is first initialized at 0 (step 202). The INT is a variable of integer and has the longest length to be handled. A pointer P is set to be the length of the data (step 204). Since it is 4 bytes in this case, the pointer P is set to 4, namely P = 4. Since P is larger than 0 (step 206), P = P - 1 is executed (208) and the character (1 byte) to which the pointer P points, in this case "2", is substituted for the variable C (step 210). The variable C is next compared with d(i) (214). A character selected from "0" to "9" is set to be d(i) (i - 0, 1, ..., 9) (steps 216 and 218). In this case, since C = 2, d(2) meets the condition (214) and out of the loop INT = INT *10 + i is calculated (220). When P = 0, the conversion of the character type into the integer type is completed (INT has a value). The value of INT is next copied into a record (23 bytes) which is prepared as an output at a position 6 bytes from the head (step 226). Before copying the region is cleared to 0 (step 24). Secondly, according to the external interface information 72 of the wage calculation command 70, the name field is required to have an attribute and length of C8. The name field (attribute and length C6) of the record taken out 80 shown in Figs. 9, 10 is accessed. Since the attribute is the same in this case, no conversion of attribute is executed; and the name of the record taken out 80 is copied into the output record 86 of 23 bytes at a position from 7 to 14 bytes from the head. Before copying the range is cleared to Null. By repetition of the above-described operations, as is shown in Fig. 9, data from the attribute and length of the name field to those of the working time field which are indicated in the external interface information 72 of the wage calculation command 70 are converted and edited, and the record which the wage calculation command 70 requires is supplied. The command processor 20a to which the necessary record is supplied executes wage calculation of the employee on the basis of the wage calculation described in the wage calculation command (142). The above-described process is repeated until the wage calculation of all the employees which are registered into the table TA is finished (144). Finally the wages of all the employees are displayed on the console display 1 (146), and thus the whole process is completed.

In the above example the data structure (field structure) of the disks 7a and 6b are slightly different, and this is related to controlling problems or other applications. Such difference of data structure is actually often generated.

According to the invention, however, data of different attributes, lengths and orders can advantageously be processed by the same command without any change of the external interface information.

As has been described in detail, this invention, which enables dynamic conversion of attributes and lengths of data, has the following remarkable advantages.

(1) When the data have different attributes and lengths, there is no need for a change of the external interface specification of an application program. In other words, even if the data structures of input/output are different, there is no need to have a plurality of programs of the same function.

(2) Data structure can kept independend from the host application of the data handling system and addition and change of function are facilitated.

(3) When the data structure is changed with the expansion of a system, it is not necessary to change the host application program.

WHAT IS CLAIMED IS:

1. A dynamic data type conversion system comprising:

a means for holding information which shows the attribute, length, and order of data as field information, and for storing a plurality of said data arranged in that order as a record in units of records;

a means for instructing that data necessary for processing should be received in units of records with an external interface information which assigns said attribute, length and order of said data as a parameter;

a means for comparing said field information with said external interface information;

a means for accessing the record taken out from said storing means in units of data and converting said attribute or length into an assigned attribute or length in units of data; and

a means for editing the converted data in an assigned order and organizing the same into a record.

2. A dynamic data type conversion system according to Claim 1, wherein said storing means is composed of a plurality of files and each of said files has a means for storing a plurality of said records in the form of a table, information which controls said tables and a means for storing said field information.

3. A dynamic data type conversion system according to Claim 1, wherein said record is controlled by the name, attribute, length of data and record positional information which is represented as an address relative to the head address of said record, and said record is an organized collection of data of different attributes and lengths.

4. A dynamic data type conversion system according to Claim 1, further comprising:

a table for controlling a plurality of files in said storing means;

a buffer memory for planting the data from said files;

a main storage having a table for controlling information in said buffer memory; and

a processing device for taking out a desired record in accordance with information stored in said main storage and processing said record taken out in accordance with said external interface information.

5. A dynamic data type conversion method comprising the steps of:

(a) inputting a command;

(b) instructing reception of data necessary for processing, with external interface information which assigns the attribute, length and order of data as a parameter, in accordance with the input command;

(c) taking out the information stored in a file which shows the attribute, length and order of data and comparing said information with said interface information;

(d) taking out a predetermined number of data stored in said file;

(e) converting the attribute and the length of said predetermined number of data taken out into the attribute and length assigned by said interface information,

(f) editing said predetermined number of converted data into the assigned order; and

(g) processing said predetermined number of edited data.

6. A data handling system comprising:

a means for storing a plurality of data of different attributes and lengths in a predetermined order;

a means for reading a predetermined number of data which is to be a unit from said storing means and accessing said unit of data;

a means for converting the attributes and lengths of the accessed data into assigned attributes and lengths; and

a means for editing the converted data into an assigned order.

1/13

0167725

FIG. 1

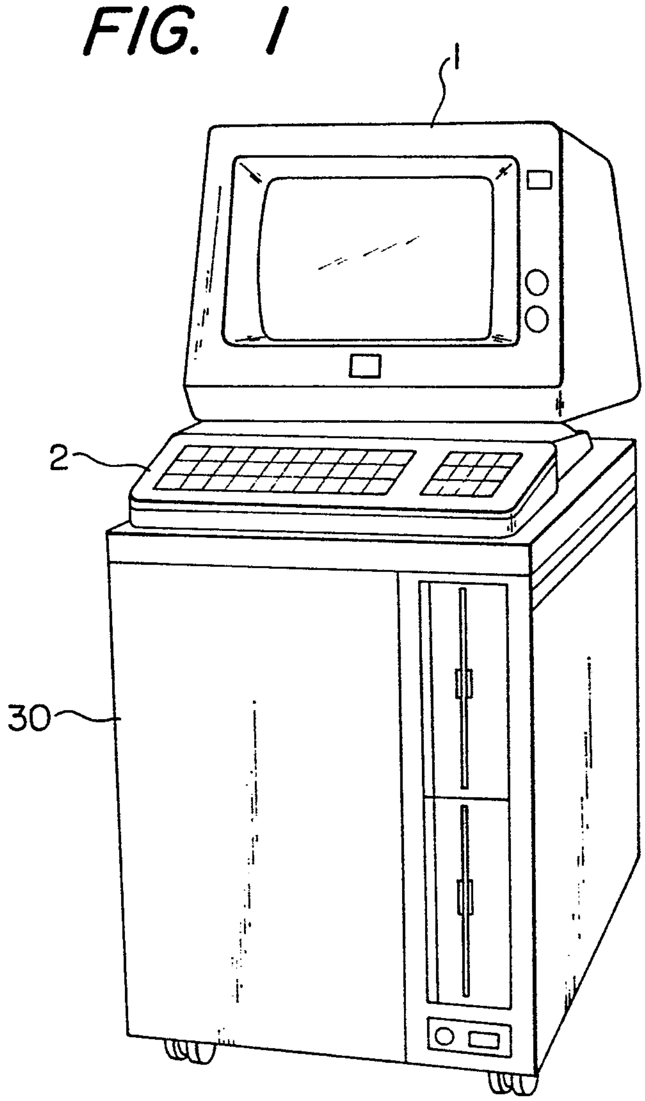


FIG. 2

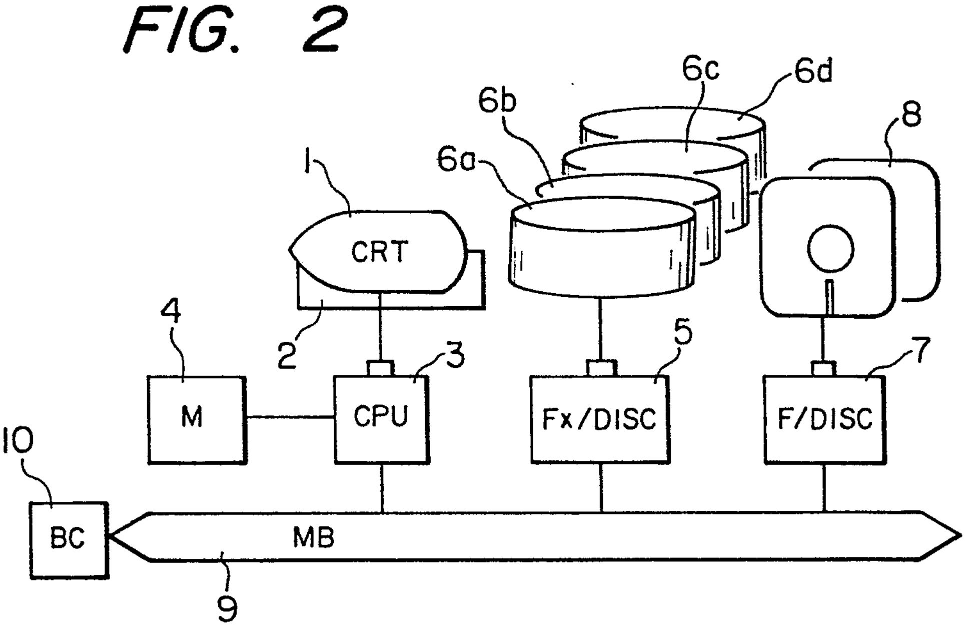

FIG. 3

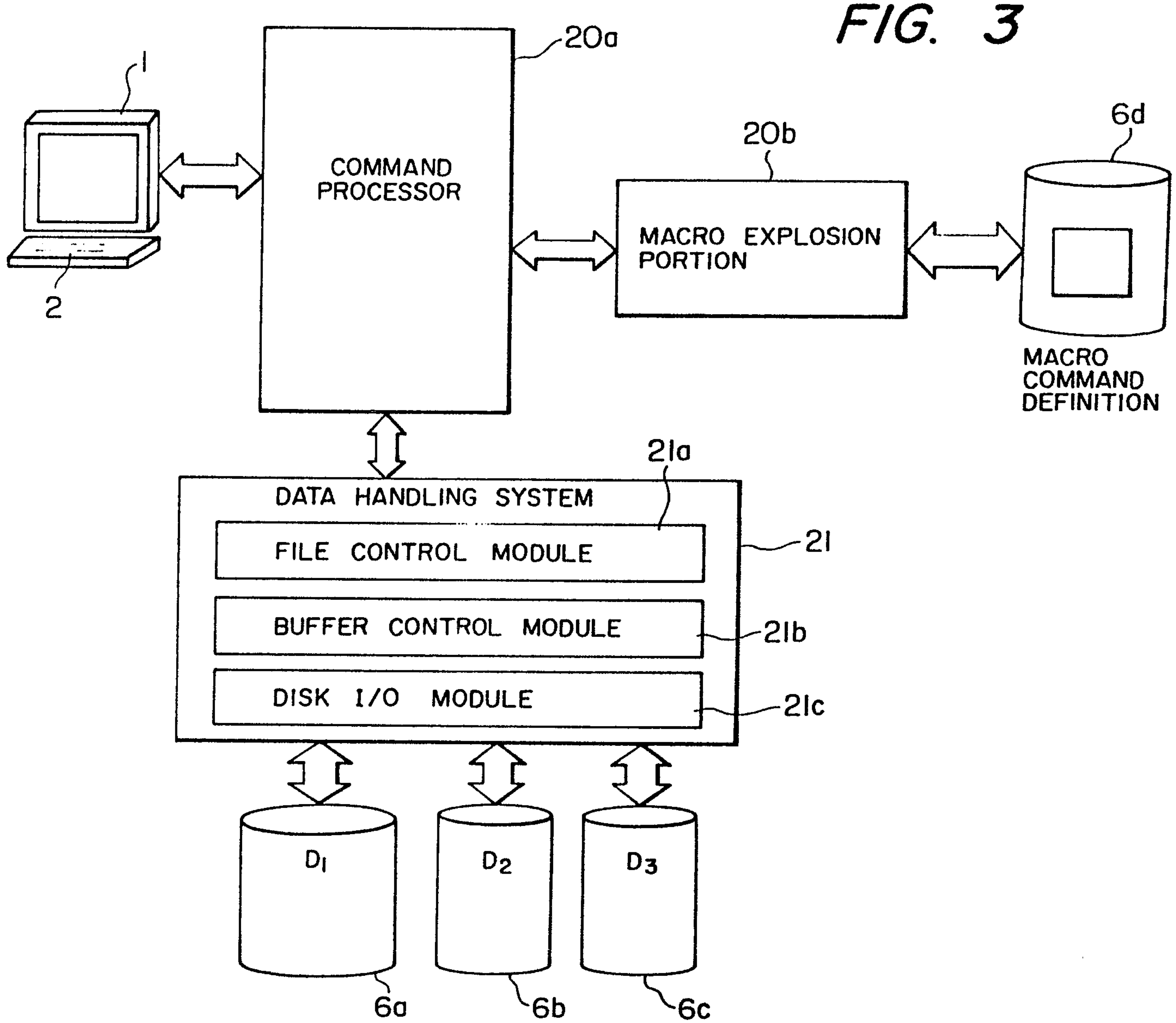
20a
1
COMMAND PROCESSOR
2
20b
MACRO EXPLOSION PORTION
6d
MACRO COMMAND DEFINITION
21a
DATA HANDLING SYSTEM
FILE CONTROL MODULE
BUFFER CONTROL MODULE
DISK I/O MODULE
21
21b
21c
D1
D2
D3
6a
6b
6c

# FIG. 4

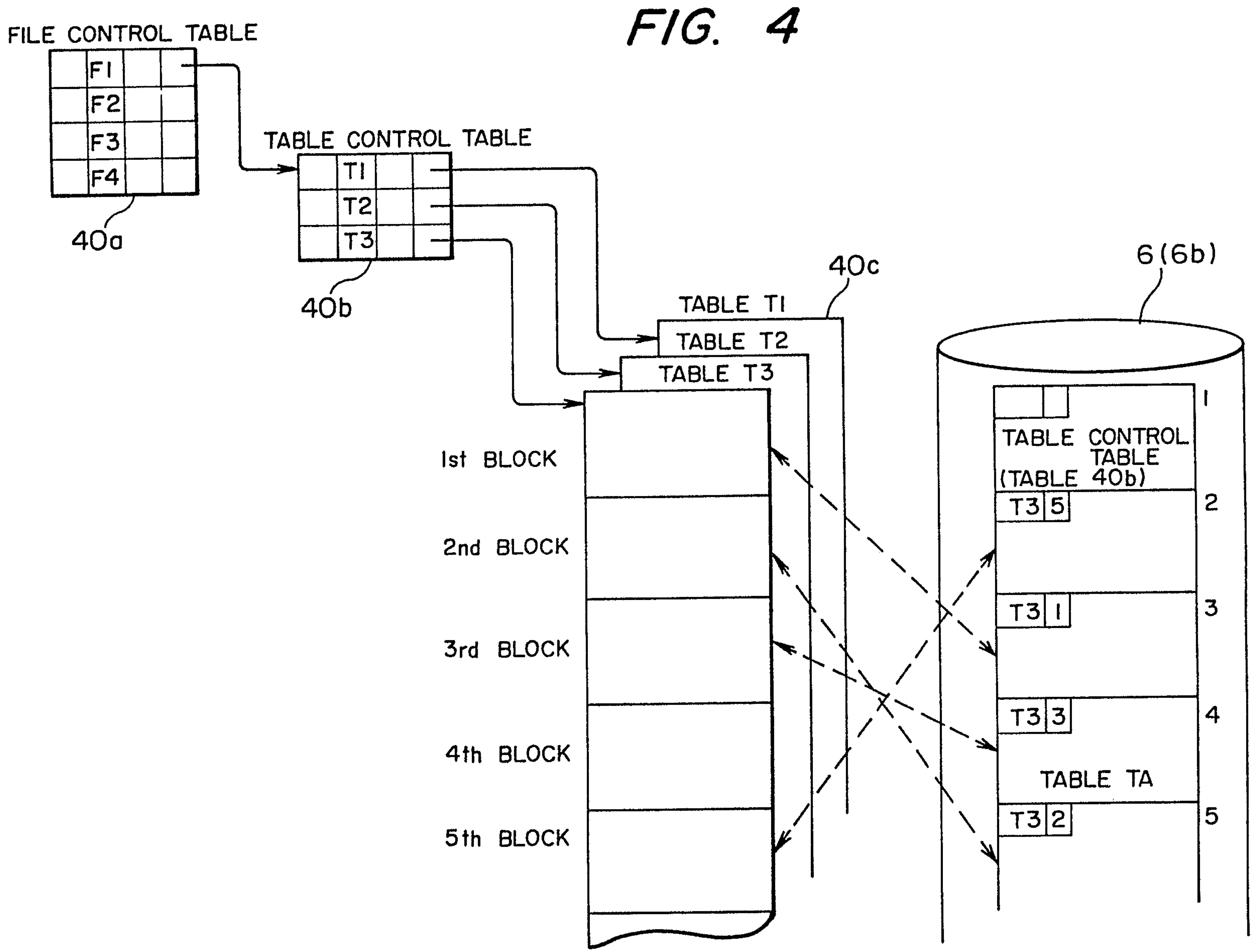

FILE CONTROL TABLE
F1
F2
F3
F4
40a
TABLE CONTROL TABLE
T1
T2
T3
40b
40c
TABLE T1
TABLE T2
TABLE T3
1st BLOCK
2nd BLOCK
3rd BLOCK
4th BLOCK
5th BLOCK
6 (6b)
1
TABLE CONTROL TABLE (TABLE 40b)
2
T3 5
3
T3 1
4
T3 3
TABLE TA
5
T3 2

FIG. 5

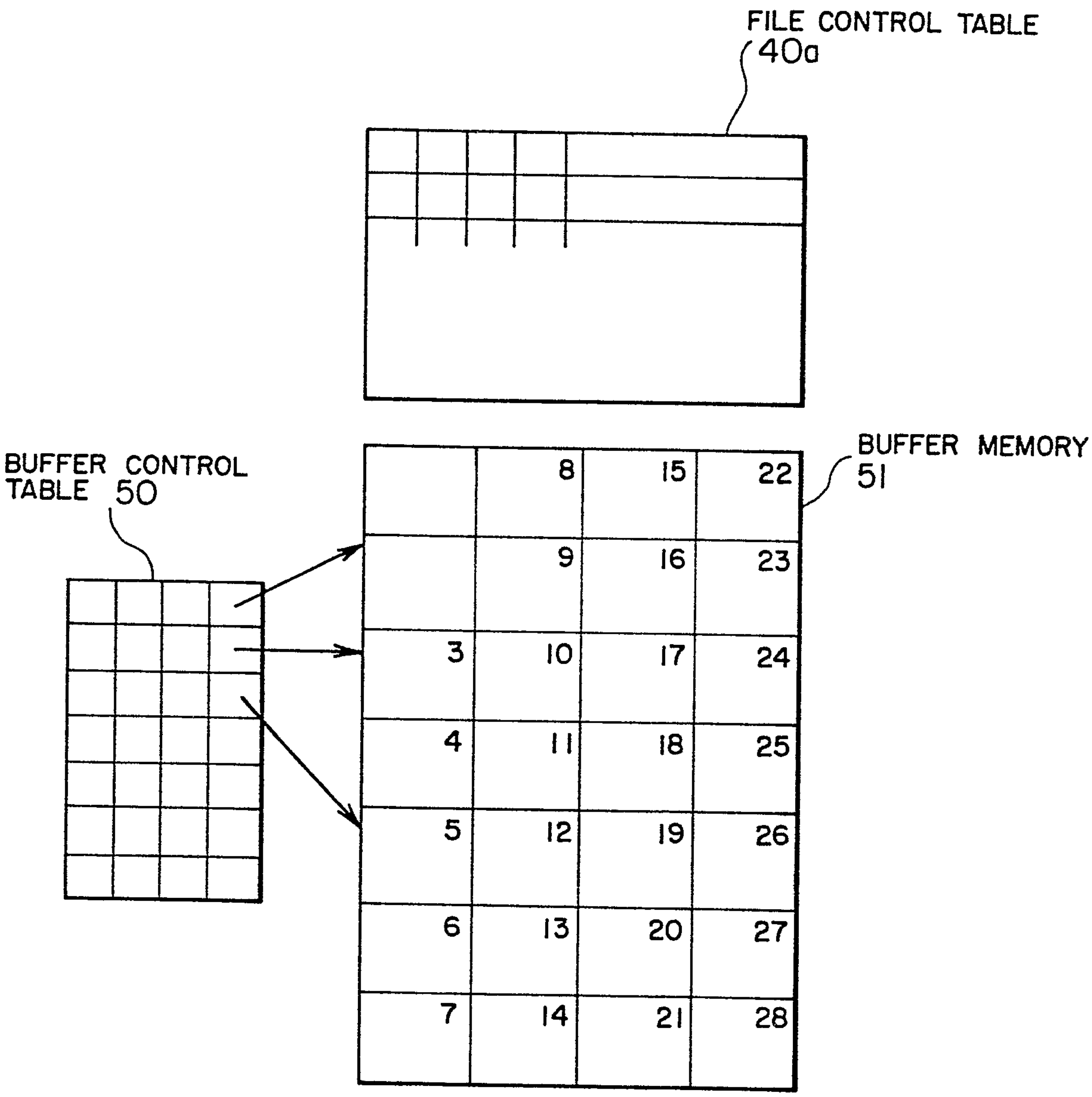
FILE CONTROL TABLE
40a
BUFFER CONTROL TABLE 50
BUFFER MEMORY
51
8
15
22
9
16
23
3
10
17
24
4
11
18
25
5
12
19
26
6
13
20
27
7
14
21
28

# FIG. 6(a)

FIELD INFORMATION

| TITLE | ATTRIBUTE | LENGTH | POSITION |
|---|---|---|---|
| NUMBER | I | 6 | 0 |
| NAME | C | 8 | 6 |
| GENDER | C | 1 | 14 |
| AGE | I | 4 | 15 |
| WORKING TIME | I | 4 | 19 |

62

DATA

| R# | | | | | |
|---|---|---|---|---|---|
| 1 | 101 | YAMA | F | 30 | 200 |
| 2 | 102 | SITA | M | 25 | 210 |
| 3 | 103 | OKA | M | 60 | 300 |
| 4 | : | | | | |
| : | : | | | | |
| | : | | | | |

60

FIG. 6(b)

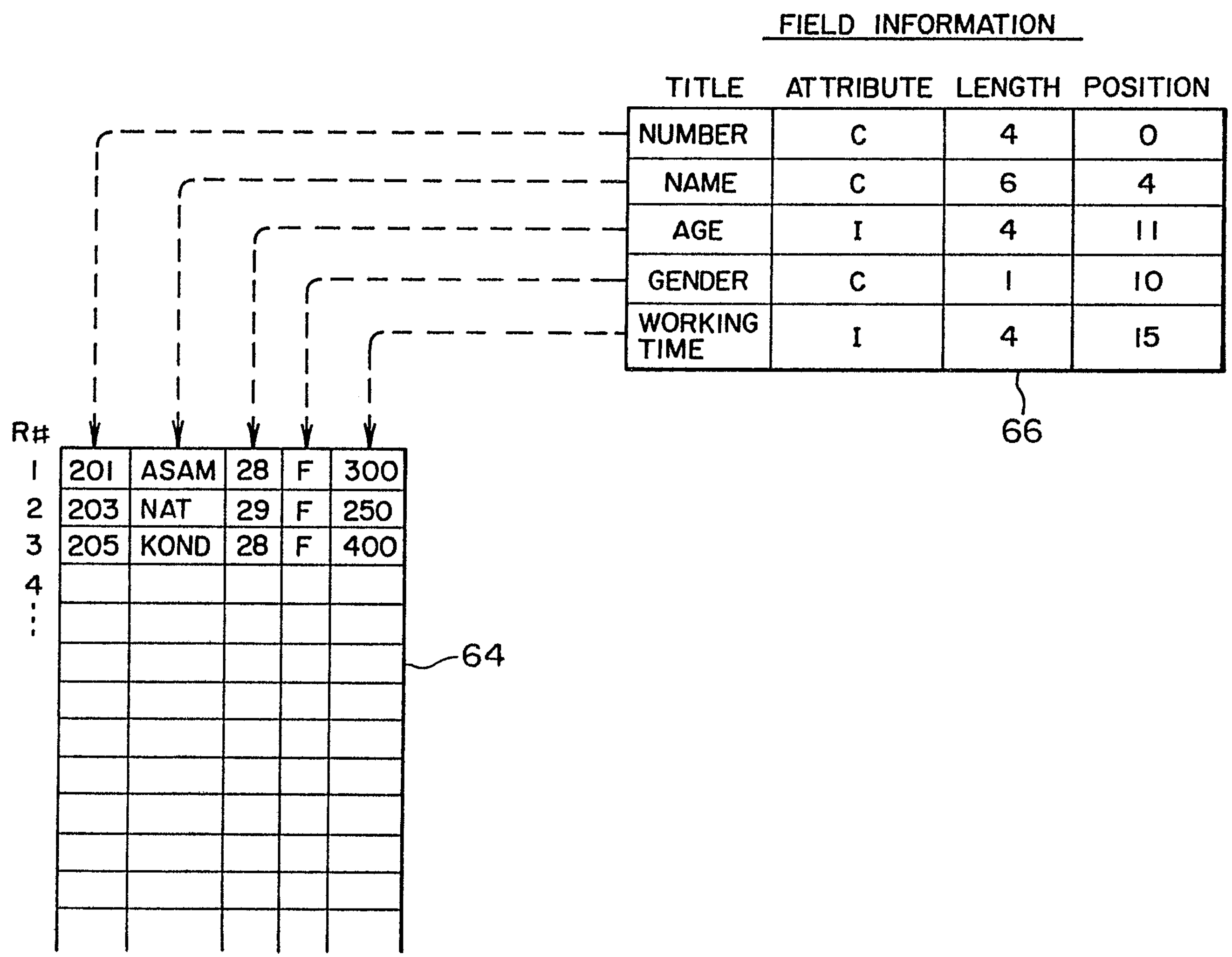
FIELD INFORMATION
TITLE
ATTRIBUTE
LENGTH
POSITION
NUMBER
C
4
0
NAME
C
6
4
AGE
I
4
11
GENDER
C
1
10
WORKING TIME
I
4
15
66
R#
1
2
3
4
201
ASAM
28
F
300
203
NAT
29
F
250
205
KOND
28
F
400
64

FIG. 7

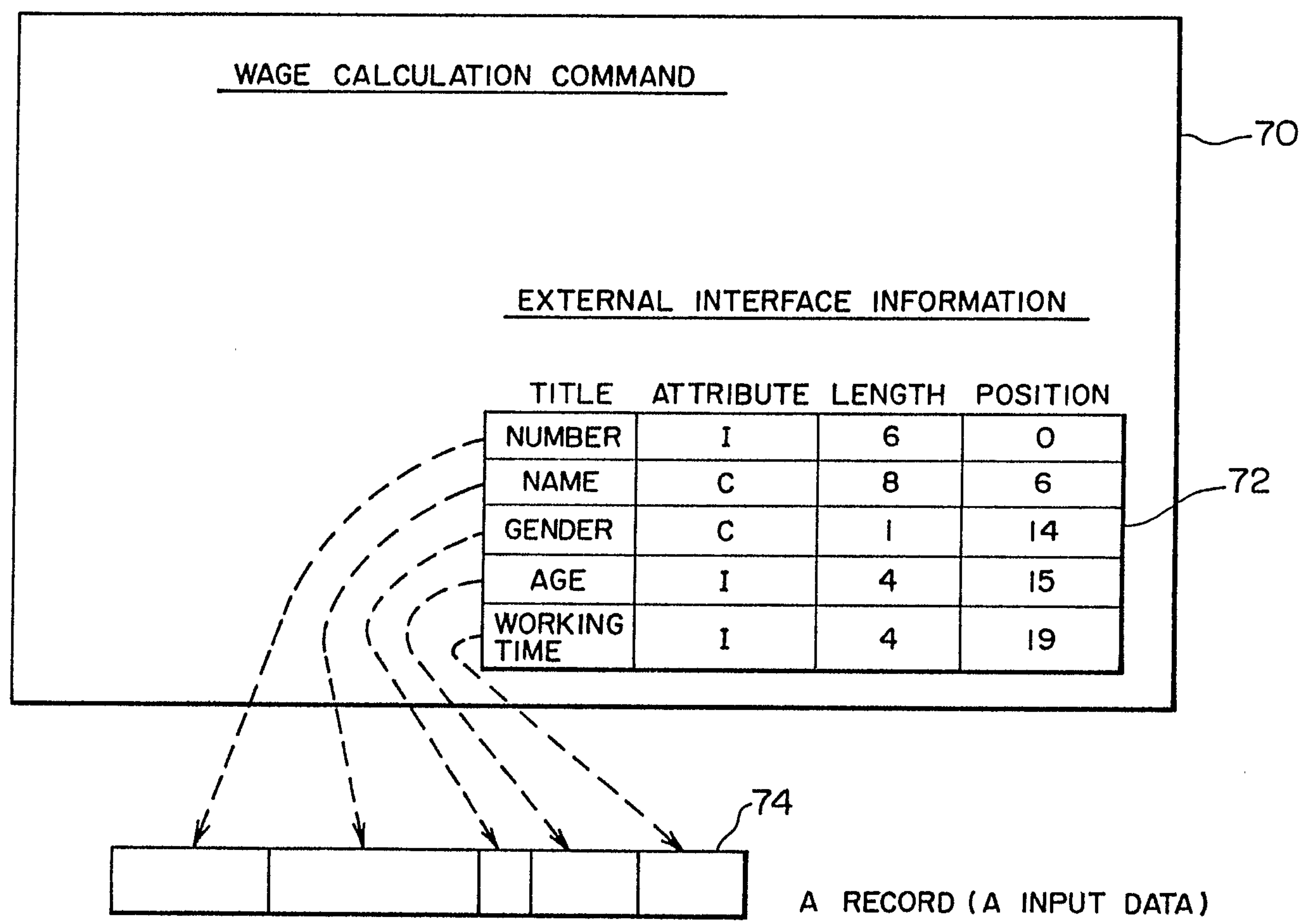
WAGE CALCULATION COMMAND
70
EXTERNAL INTERFACE INFORMATION
TITLE
ATTRIBUTE
LENGTH
POSITION
NUMBER
I
6
0
NAME
C
8
6
GENDER
C
1
14
AGE
I
4
15
WORKING TIME
I
4
19
72
74
A RECORD (A INPUT DATA)

FIG. 8(a)

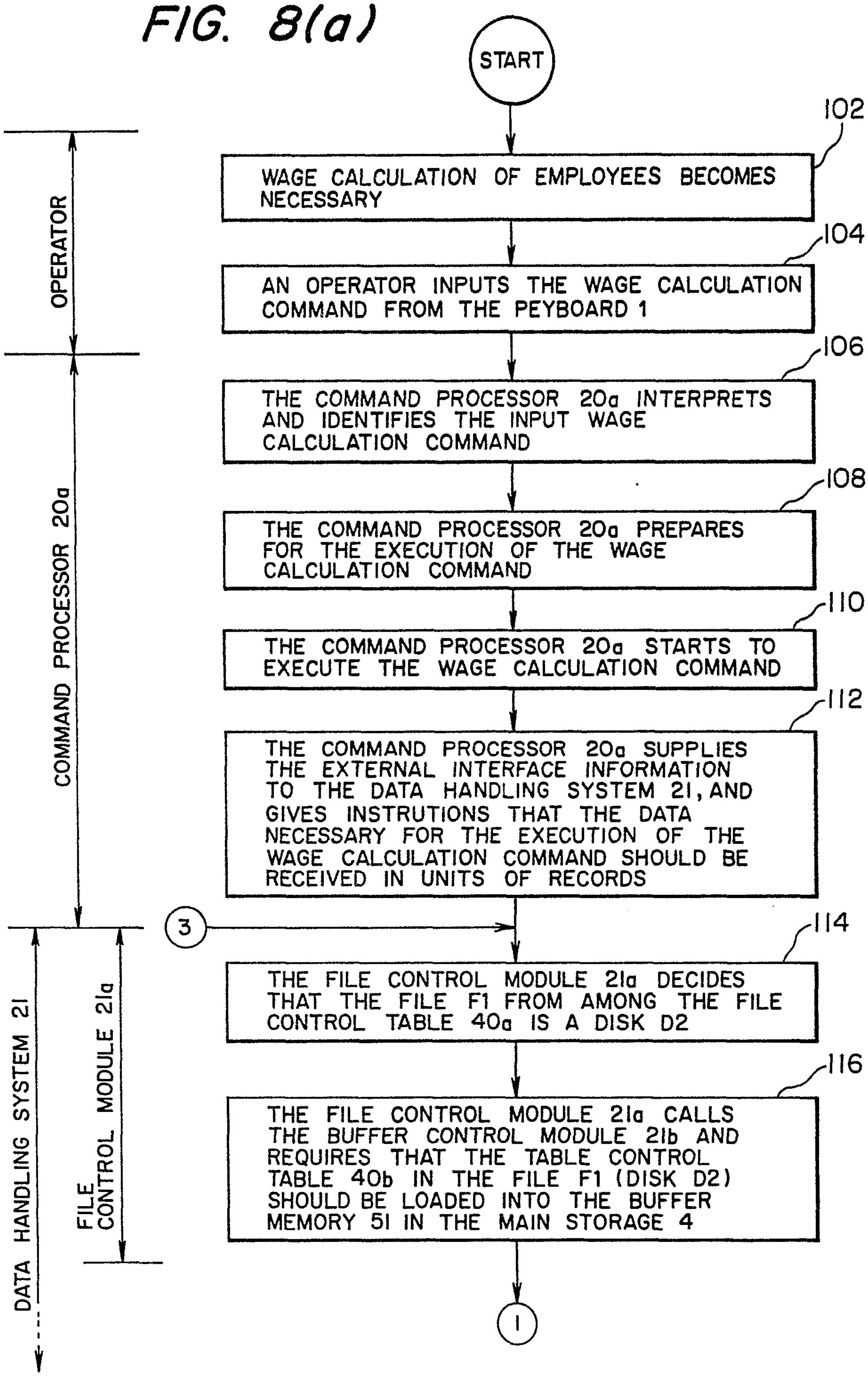
START
102
WAGE CALCULATION OF EMPLOYEES BECOMES NECESSARY
104
AN OPERATOR INPUTS THE WAGE CALCULATION COMMAND FROM THE PEYBOARD 1
106
THE COMMAND PROCESSOR 20a INTERPRETS AND IDENTIFIES THE INPUT WAGE CALCULATION COMMAND
108
THE COMMAND PROCESSOR 20a PREPARES FOR THE EXECUTION OF THE WAGE CALCULATION COMMAND
110
THE COMMAND PROCESSOR 20a STARTS TO EXECUTE THE WAGE CALCULATION COMMAND
112
THE COMMAND PROCESSOR 20a SUPPLIES THE EXTERNAL INTERFACE INFORMATION TO THE DATA HANDLING SYSTEM 21, AND GIVES INSTRUTIONS THAT THE DATA NECESSARY FOR THE EXECUTION OF THE WAGE CALCULATION COMMAND SHOULD BE RECEIVED IN UNITS OF RECORDS
3
114
THE FILE CONTROL MODULE 21a DECIDES THAT THE FILE F1 FROM AMONG THE FILE CONTROL TABLE 40a IS A DISK D2
116
THE FILE CONTROL MODULE 21a CALLS THE BUFFER CONTROL MODULE 21b AND REQUIRES THAT THE TABLE CONTROL TABLE 40b IN THE FILE F1 (DISK D2) SHOULD BE LOADED INTO THE BUFFER MEMORY 51 IN THE MAIN STORAGE 4
1
OPERATOR
COMMAND PROCESSOR 20a
DATA HANDLING SYSTEM 21
FILE CONTROL MODULE 21a

FIG. 8(b)

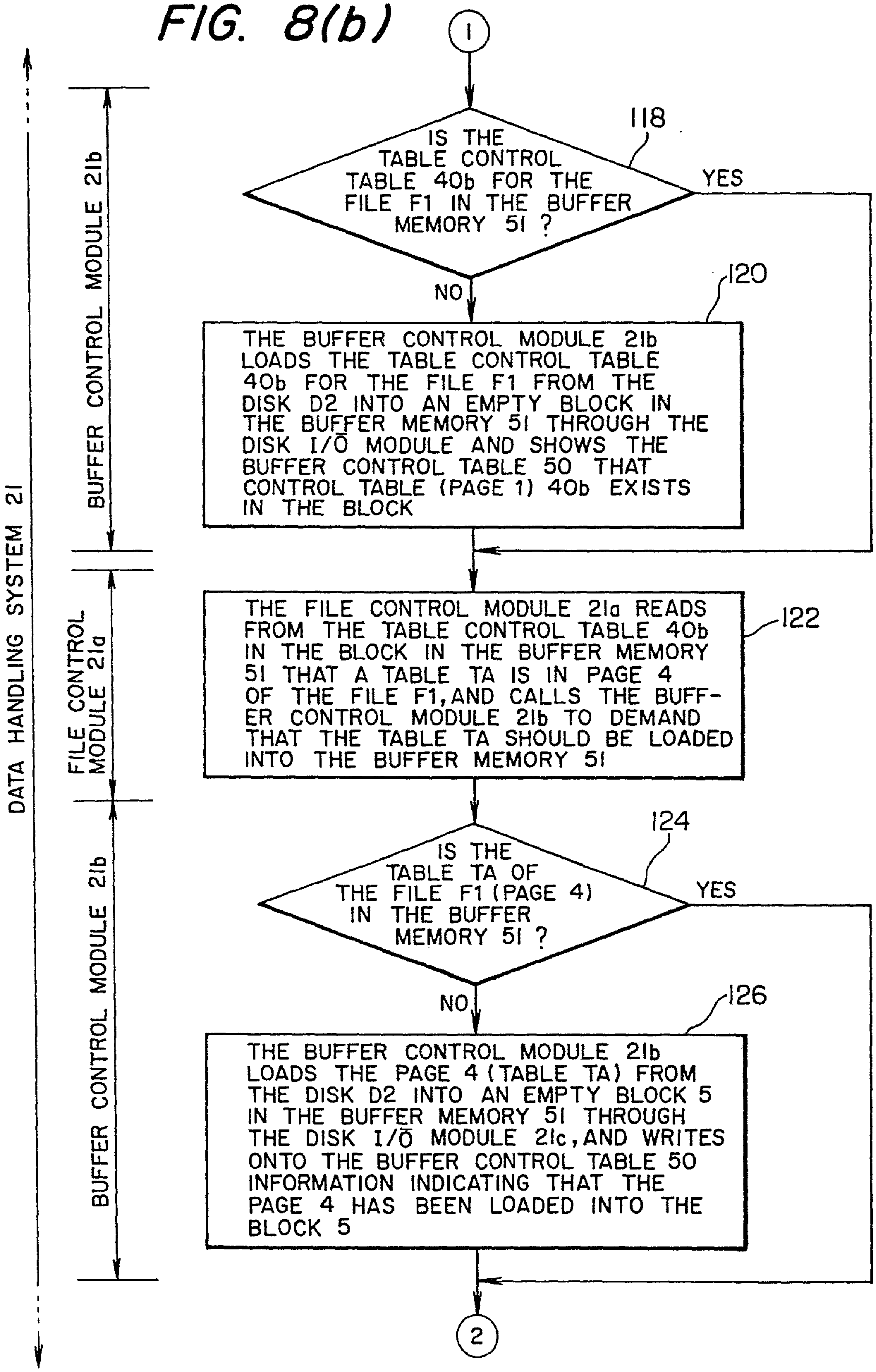
1
DATA HANDLING SYSTEM 21
BUFFER CONTROL MODULE 21b
118
IS THE TABLE CONTROL TABLE 40b FOR THE FILE F1 IN THE BUFFER MEMORY 51 ?
YES
NO
120
THE BUFFER CONTROL MODULE 21b LOADS THE TABLE CONTROL TABLE 40b FOR THE FILE F1 FROM THE DISK D2 INTO AN EMPTY BLOCK IN THE BUFFER MEMORY 51 THROUGH THE DISK I/O MODULE AND SHOWS THE BUFFER CONTROL TABLE 50 THAT CONTROL TABLE (PAGE 1) 40b EXISTS IN THE BLOCK
FILE CONTROL MODULE 21a
122
THE FILE CONTROL MODULE 21a READS FROM THE TABLE CONTROL TABLE 40b IN THE BLOCK IN THE BUFFER MEMORY 51 THAT A TABLE TA IS IN PAGE 4 OF THE FILE F1, AND CALLS THE BUFFER CONTROL MODULE 21b TO DEMAND THAT THE TABLE TA SHOULD BE LOADED INTO THE BUFFER MEMORY 51
BUFFER CONTROL MODULE 21b
124
IS THE TABLE TA OF THE FILE F1 (PAGE 4) IN THE BUFFER MEMORY 51 ?
YES
NO
126
THE BUFFER CONTROL MODULE 21b LOADS THE PAGE 4 (TABLE TA) FROM THE DISK D2 INTO AN EMPTY BLOCK 5 IN THE BUFFER MEMORY 51 THROUGH THE DISK I/O MODULE 21c, AND WRITES ONTO THE BUFFER CONTROL TABLE 50 INFORMATION INDICATING THAT THE PAGE 4 HAS BEEN LOADED INTO THE BLOCK 5
2

FIG. 8(c)

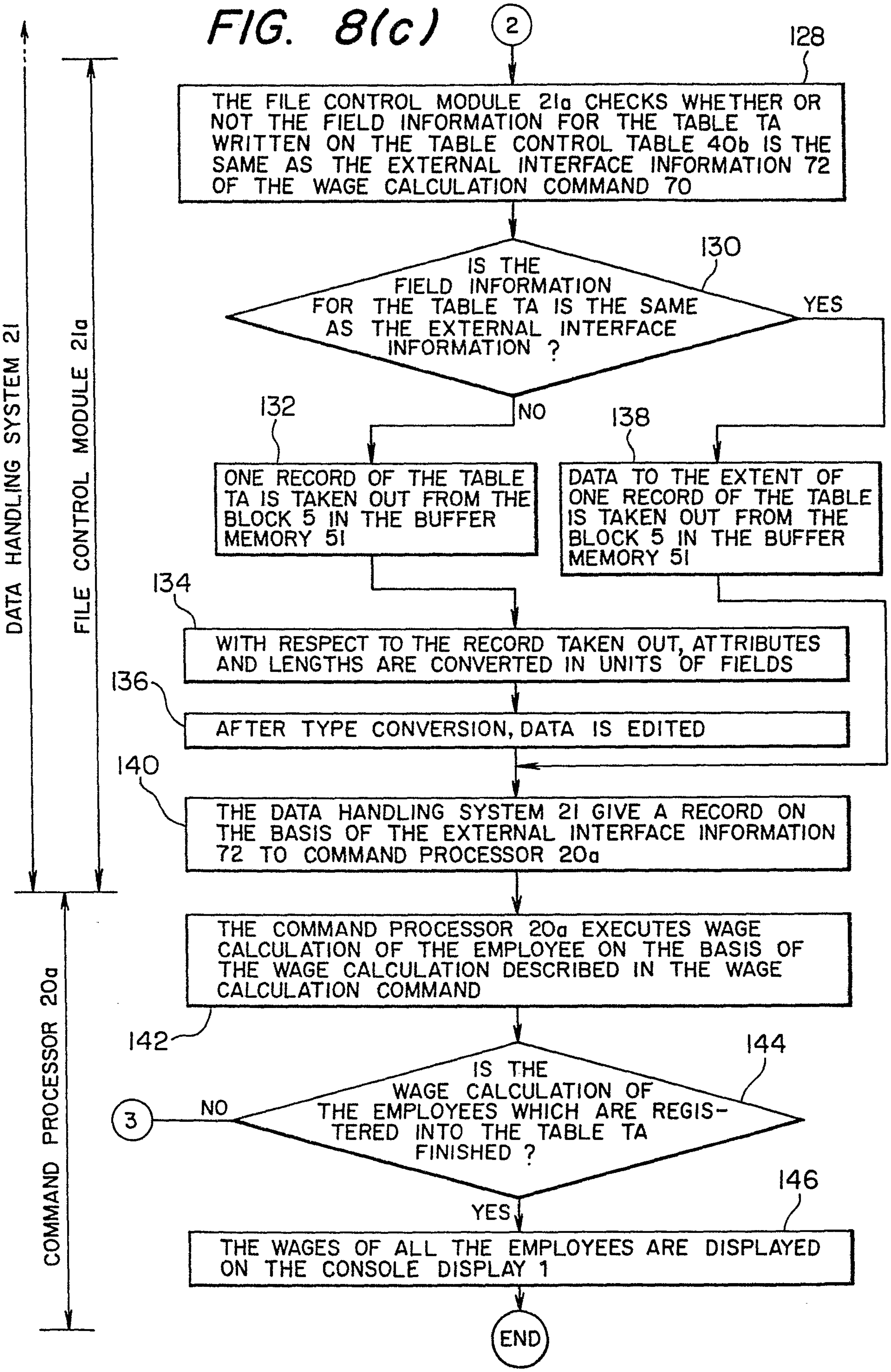
2
128
THE FILE CONTROL MODULE 21a CHECKS WHETHER OR NOT THE FIELD INFORMATION FOR THE TABLE TA WRITTEN ON THE TABLE CONTROL TABLE 40b IS THE SAME AS THE EXTERNAL INTERFACE INFORMATION 72 OF THE WAGE CALCULATION COMMAND 70
130
IS THE FIELD INFORMATION FOR THE TABLE TA IS THE SAME AS THE EXTERNAL INTERFACE INFORMATION ?
YES
NO
132
ONE RECORD OF THE TABLE TA IS TAKEN OUT FROM THE BLOCK 5 IN THE BUFFER MEMORY 51
138
DATA TO THE EXTENT OF ONE RECORD OF THE TABLE IS TAKEN OUT FROM THE BLOCK 5 IN THE BUFFER MEMORY 51
134
WITH RESPECT TO THE RECORD TAKEN OUT, ATTRIBUTES AND LENGTHS ARE CONVERTED IN UNITS OF FIELDS
136
AFTER TYPE CONVERSION, DATA IS EDITED
140
THE DATA HANDLING SYSTEM 21 GIVE A RECORD ON THE BASIS OF THE EXTERNAL INTERFACE INFORMATION 72 TO COMMAND PROCESSOR 20a
THE COMMAND PROCESSOR 20a EXECUTES WAGE CALCULATION OF THE EMPLOYEE ON THE BASIS OF THE WAGE CALCULATION DESCRIBED IN THE WAGE CALCULATION COMMAND
142
144
IS THE WAGE CALCULATION OF THE EMPLOYEES WHICH ARE REGISTERED INTO THE TABLE TA FINISHED ?
NO
3
YES
146
THE WAGES OF ALL THE EMPLOYEES ARE DISPLAYED ON THE CONSOLE DISPLAY 1
END
DATA HANDLING SYSTEM 21
FILE CONTROL MODULE 21a
COMMAND PROCESSOR 20a

FIG. 9

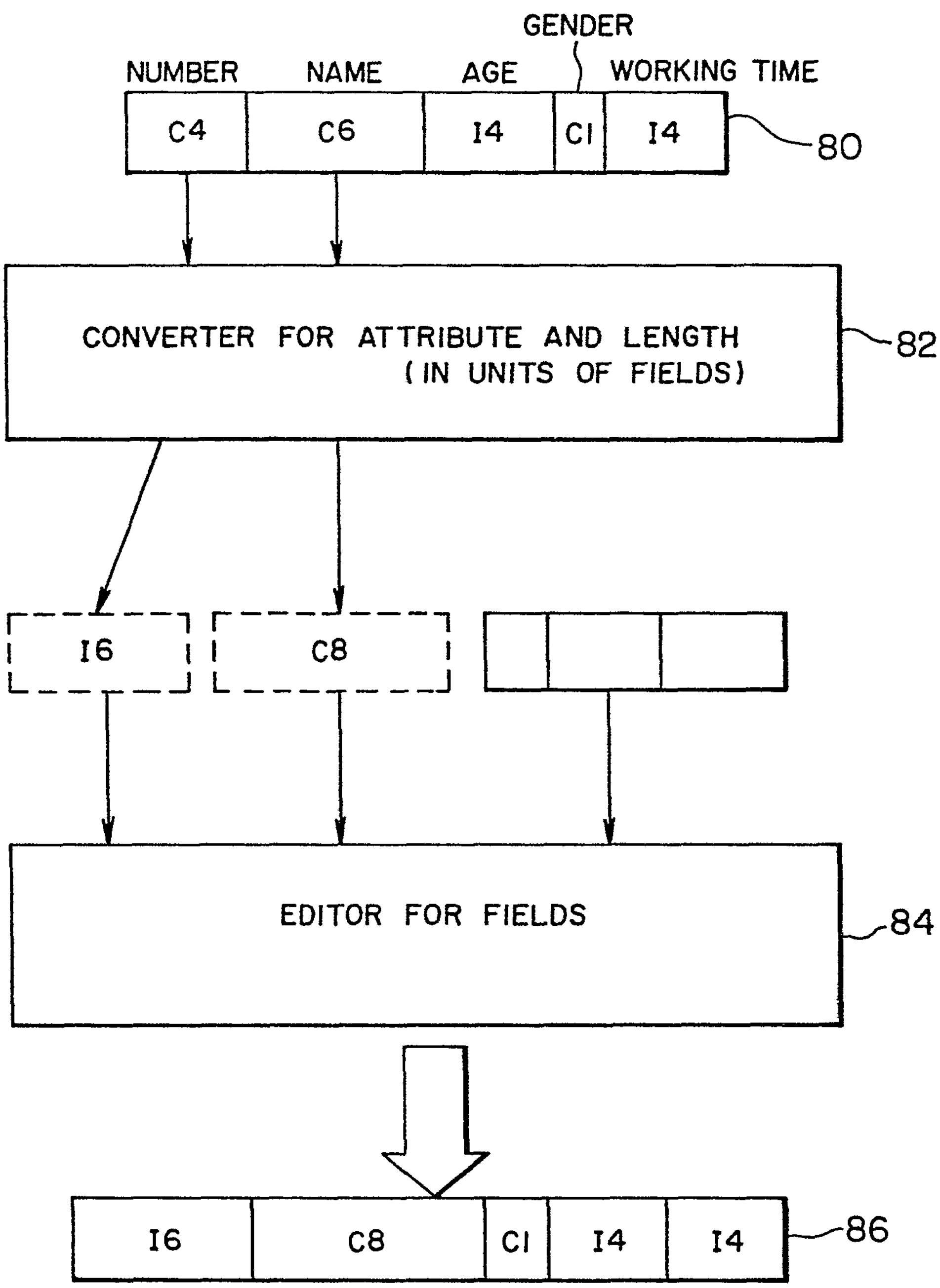
GENDER
NUMBER
NAME
AGE
WORKING TIME
C4
C6
I4
CI
I4
80
CONVERTER FOR ATTRIBUTE AND LENGTH
(IN UNITS OF FIELDS)
82
I6
C8
EDITOR FOR FIELDS
84
I6
C8
CI
I4
I4
86

0167725

FIG. 10

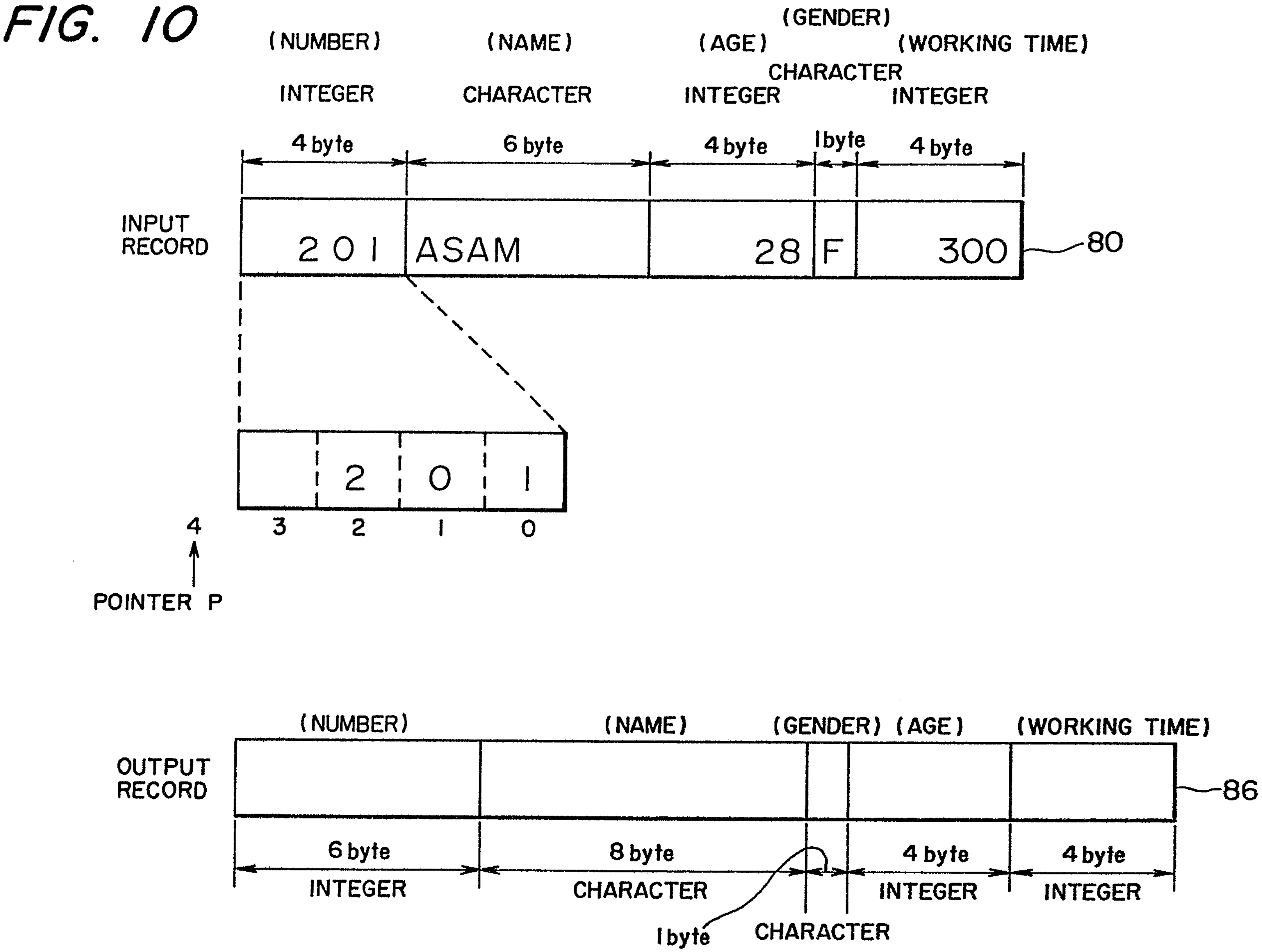

FIG. 11

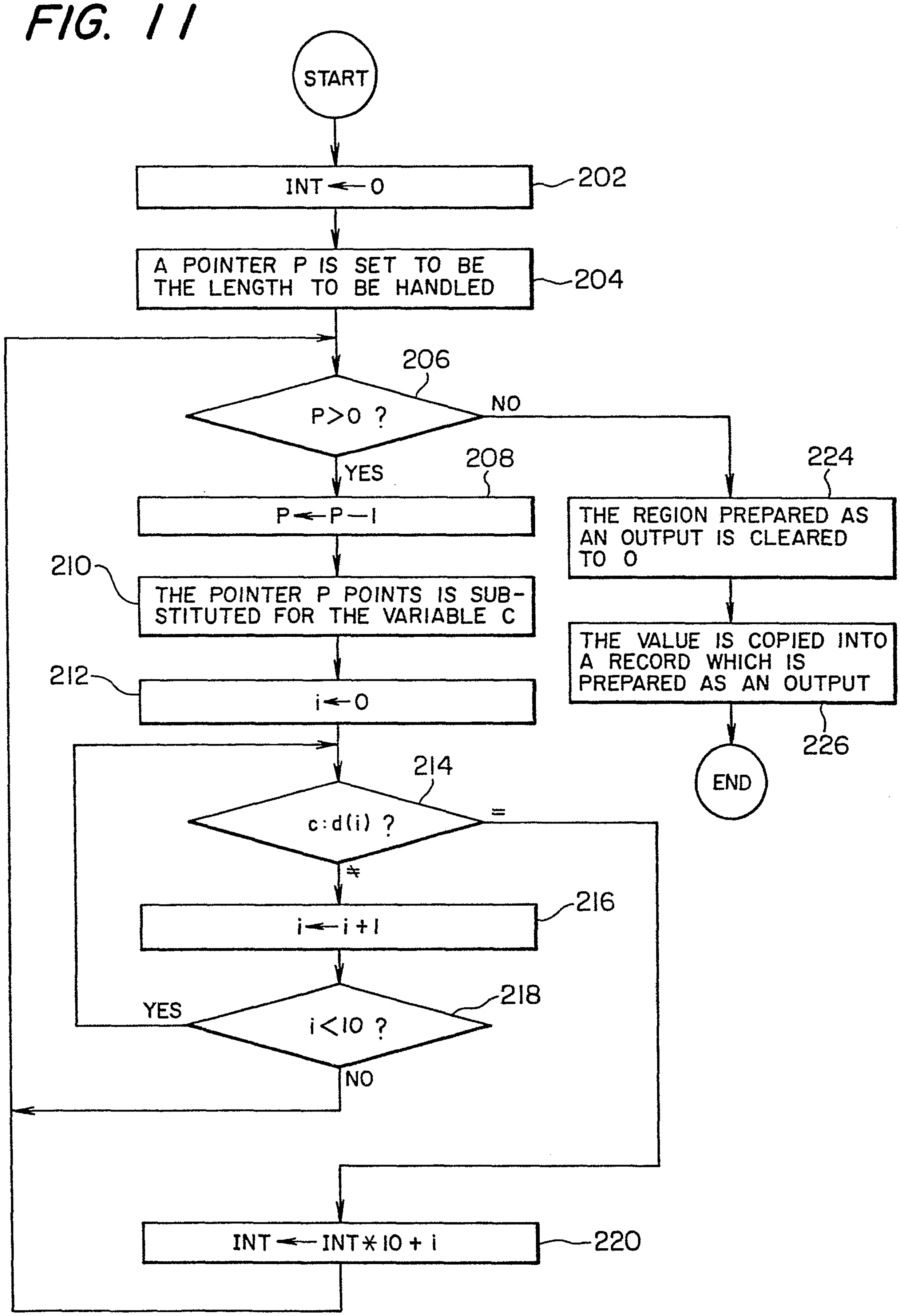
START
INT ← 0
202
A POINTER P IS SET TO BE THE LENGTH TO BE HANDLED
204
206
P>0 ?
NO
YES
208
P ← P − 1
224
THE REGION PREPARED AS AN OUTPUT IS CLEARED TO 0
210
THE POINTER P POINTS IS SUBSTITUTED FOR THE VARIABLE C
THE VALUE IS COPIED INTO A RECORD WHICH IS PREPARED AS AN OUTPUT
212
i ← 0
226
END
214
c:d(i) ?
=
≠
216
i ← i + 1
218
YES
i<10 ?
NO
INT ← INT * 10 + i
220